# EUROPEAN PATENT APPLICATION

(11) **EP 4 654 129 A1**
(43) Date of publication of application: **26.11.2025**
(21) Application number: 25170712.1
(22) Date of filing: 15.04.2025
(51) Int. Cl.: G06T 7/246

(54) **FOOT POSITION ESTIMATING DEVICE, FOOT POSITION ESTIMATING SYSTEM, METHOD AND COMPUTER PROGRAM FOR ESTIMATING FOOT POSITION, AND MOVEMENT SENSING DEVICE**

(30) Priority: 21.05.2024 JP 2024082676; 02.12.2024 JP 2024209655
(71) Applicant: TOYOTA JIDOSHA KABUSHIKI KAISHA, Toyota-shi, Aichi-ken, 471-8571 (JP); Aisin Corporation, Kariya, Aichi 448-8650 (JP)
(72) Inventor: YOKOYAMA, Hiroshi, Tokyo, 103-0022 (JP); HASHIKAWA, Takuya, Tokyo, 103-0022 (JP)
(74) Representative: D Young & Co LLP

(57) **Abstract**

A foot position estimating device (4) includes a detection unit (21) that detects a human region representing a human in a predetermined region from an image generated by an image capturing unit (2) configured to capture the predetermined region, and an estimation unit (22) that estimates a point of intersection of a line from a reference point in the human region to a vanishing point of the image with an edge of the human region as a foot position of the human, thereby correctly estimating a foot position of the human represented in the image.

## Description

### FIELD

The present invention relates to a foot position estimating device, a foot position estimating system, and a method and a computer program for estimating a foot position of a human represented in an image and to a movement sensing device.

### BACKGROUND

A technique to estimate the posture of a human represented in an image has been proposed (see Japanese Unexamined Patent Publication No. 2015-79339). In this technique, the posture of a human is estimated based on a posture evaluation formula from features calculated for a human region in an input image. Specifically, in this technique, the lowest point in a human region is estimated to be a human's foot position.

### SUMMARY

A camera including a wide-angle lens, or a fisheye lens in some cases, as an imaging optical system may be used for monitoring so that as large a region as possible can be captured. In such a case, an object represented in an image may be greatly distorted because of distortion of the imaging optical system. This may cause the above-described technique to fail to correctly estimate a foot position of a human represented in an image.

It is an object of the present invention to provide a foot position estimating device that can correctly estimate a foot position of a human represented in an image.

As an aspect of the present invention, a foot position estimating device is provided. The foot position estimating device includes a detection unit that detects a human region representing a human in a predetermined region from an image generated by an image capturing unit configured to capture the predetermined region, and an estimation unit that estimates a point of intersection of a line from a reference point in the human region to a vanishing point of the image with an edge of the human region as a foot position of the human.

In an embodiment, the estimation unit corrects the foot position of the human so that a position on the line from the reference point to the vanishing point at a correction distance from the point of intersection toward the reference point is the foot position, the correction distance being preset depending on a distance between the vanishing point and the reference point.

In an embodiment, when the vanishing point is within the human region, the estimation unit estimates that a position where the line segment between the reference point and the vanishing point is internally divided in a ratio of a distance between the reference point and the vanishing point to a distance between the reference point and the point of intersection of the line from the reference point to the vanishing point with an edge of the human region closer to the vanishing point on the line is the foot position of the human.

In an embodiment, the detection unit detects the human region from each of time-series images obtained by the image capturing unit in a predetermined period; the estimation unit estimates a foot position of the human in each of the images. The foot position estimating device further includes a tracking unit that tracks the detected human in the images to determine a trajectory of the foot position of the human in the predetermined period; and a determination unit that determines that the detected human has moved in the predetermined period, in the case where a distance between the foot positions of the detected human at the start and the end of the predetermined period is not less than a first threshold, and where a length of the trajectory from the start to the end of the predetermined period is not less than a second threshold.

In an embodiment, the detection unit detects the human region from each of the images captured at different timings; the estimation unit stores the foot positions estimated from the respective images in a storage unit. The foot position estimating device further includes an identification unit that identifies an abnormal position, based on the distribution of the foot positions stored in the storage unit.

According to another embodiment, a method for estimating a foot position is provided. The method includes detecting a human region representing a human in a predetermined region from an image generated by an image capturing unit configured to capture the predetermined region, and estimating a point of intersection of a line from a reference point in the human region to a vanishing point of the image with an edge of the human region as a foot position of the human.

According to still another embodiment, a foot position estimating system is provided. The foot position estimating system includes an image capturing unit configured to capture a predetermined region, and a foot position estimating device that estimates a foot position of a human in the predetermined region. The foot position estimating device includes a detection unit that detects a human region representing a human in the predetermined region from an image generated by the image capturing unit, and an estimation unit that estimates a point of intersection of a line from a reference point in the human region to a vanishing point of the image with an edge of the human region as a foot position of the human.

According to yet another embodiment, a computer program for estimating a foot position is provided. The computer program includes instructions causing a computer to execute a process including detecting a human region representing a human in a predetermined region from an image generated by an image capturing unit configured to capture the predetermined region, and estimating a point of intersection of a line from a reference point in the human region to a vanishing point of the image with an edge of the human region as a foot position of the human.

According to a further embodiment, a movement sensing device is provided. The movement sensing device includes a detection unit that detects a human in a predetermined region from each of time-series images generated by an image capturing unit configured to capture the predetermined region, and that estimates the position of a predetermined part of the detected human in one or more images representing the human; a tracking unit that tracks the detected human in the one or more images to determine a trajectory of the position of the predetermined part of the human in a predetermined period; and a determination unit that determines that the detected human has moved in the predetermined period, in the case where a distance between the positions of the predetermined part of the detected human at the start and the end of the predetermined period is not less than a first threshold, and where a length of the trajectory from the start to the end of the predetermined period is not less than a second threshold.

The foot position estimating device according to the present disclosure has an advantageous effect of being able to correctly estimate a foot position of a human represented in an image.

### BRIEF DESCRIPTION OF DRAWINGS

FIG. 1 schematically illustrates the configuration of a system related to determination of movement equipped with a foot position estimating device of an embodiment.
FIG. 2 illustrates the hardware configuration of the foot position estimating device.
FIG. 3 is a functional block diagram of a processor, related to a movement sensing process including estimation of a foot position.
FIG. 4A is a schematic diagram for explaining estimation of a passenger's foot position.
FIG. 4B is a schematic diagram for explaining estimation of a passenger's foot position.
FIG. 5 is a schematic diagram for explaining estimation of a passenger's foot position of a modified example.
FIG. 6A is a schematic diagram for explaining determination of movement sensing.
FIG. 6B is a schematic diagram for explaining determination of movement sensing.
FIG. 7 is an operation flowchart of the movement sensing process including estimation of a foot position.
FIG. 8 is a functional block diagram of the processor of a modified example in which an abnormal region is identified based on the results of estimation of a foot position.

### DESCRIPTION OF EMBODIMENTS

A foot position estimating device, a method and a computer program for estimating a foot position executed by the foot position estimating device, and a foot position estimating system will now be described with reference to the attached drawings. The foot position estimating device detects a human region representing a human in a predetermined region from an image generated by an image capturing unit, and estimates a point of intersection of a line from a reference point in the human region to the vanishing point of the image with an edge of the human region to be a foot position of the human. This enables the foot position estimating device to estimate a human's foot position correctly even if a camera that generates images representing a greatly distorted object because of distortion or the like is used as the image capturing unit.

The following describes an example in which the foot position estimating device is used in a system for sensing movement of a passenger in a vehicle. A passenger is an example of a human whose movement is to be sensed. A foot is an example of the predetermined part. However, the foot position estimating device is not limited to this example, and may be used for sensing movement of a human within a predetermined region in a moving object that passengers or crew members can get on, such as a railway vehicle, or in a building or a facility.

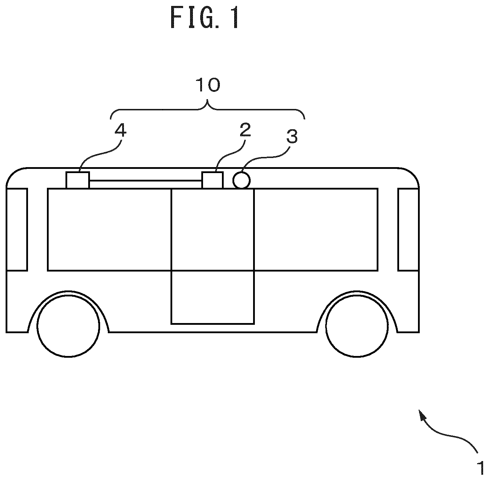

FIG. 1 schematically illustrates the configuration of a system 10 related to determination of movement equipped with a foot position estimating device of an embodiment. The system 10 equipped with a foot position estimating device is mounted on a vehicle 1. The vehicle 1 has enough interior space for multiple passengers to get on and to stand and move around, such as a bus. The system 10 includes a camera 2, an alert device 3, and a foot position estimating device 4.

The camera 2, which is an example of the image capturing unit, includes, for example, a wide-angle lens or a fisheye lens as an imaging optical system and is mounted near the ceiling of the interior of the vehicle 1 towards the bottom so that the area captured by the camera 2 includes the whole interior region where passengers can stay inside the vehicle 1. The interior region is an example of a predetermined region captured by the image capturing unit. The camera 2 generates an image representing the interior region every predetermined capturing period (e.g., 1/30 to 1/10 seconds). Every time an image is generated, the camera 2 outputs the generated image to the foot position estimating device 4 via an in-vehicle network.

The alert device 3 can issue a predetermined alert to passengers staying inside the vehicle 1, includes, for example, a speaker, a buzzer, a beeper, or a display, and is mounted inside the vehicle 1. According to an alert signal from the foot position estimating device 4, the alert device 3 outputs a predetermined alert, e.g., a voice alerting passengers in the vehicle 1 not to move, or displays a message corresponding to this alert.

The foot position estimating device 4 executes a movement sensing process including a foot position estimating process, based on an image generated by the camera 2.

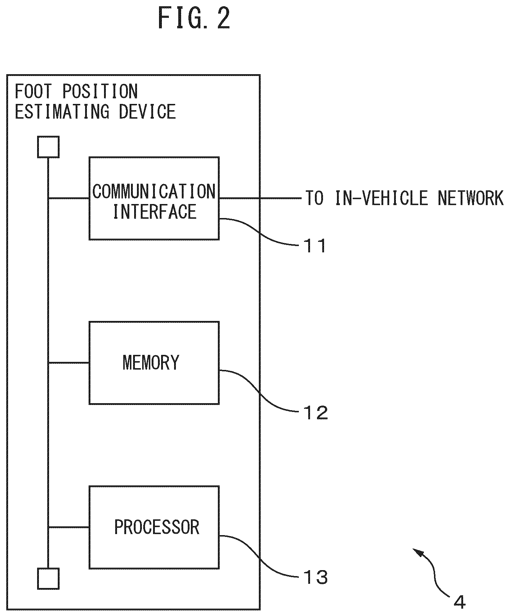

FIG. 2 illustrates the hardware configuration of the foot position estimating device 4. As illustrated in FIG. 2, the foot position estimating device 4 includes a communication interface 11, a memory 12, and a processor 13. The communication interface 11, the memory 12 and the processor 13 may be configured as separate circuits or a single integrated circuit.

The communication interface 11 includes an interface circuit for connecting the foot position estimating device 4 to the in-vehicle network. The communication interface 11 passes an image received from the camera 2 to the processor 13, and outputs an alert signal received from the processor 13 to the alert device 3.

The memory 12, which is an example of the storage unit, includes, for example, volatile and nonvolatile semiconductor memories. The memory 12 stores various programs and various types of data used in a movement sensing process including a foot position estimating process executed by the processor 13 of the foot position estimating device 4. For example, the memory 12 stores parameters for specifying a classifier used for detecting an occupant, thresholds for determination of movement sensing, the position of a vanishing point, and the position and area of the interior region represented in images. In addition, the memory 22 temporarily stores images received from the camera 2 and various types of data generated during the movement sensing process.

The processor 13 includes one or more central processing units (CPUs) and a peripheral circuit thereof. The processor 13 may further include another operating circuit, such as a logic-arithmetic unit, an arithmetic unit, or a graphics processing unit. The processor 13 executes the movement sensing process.

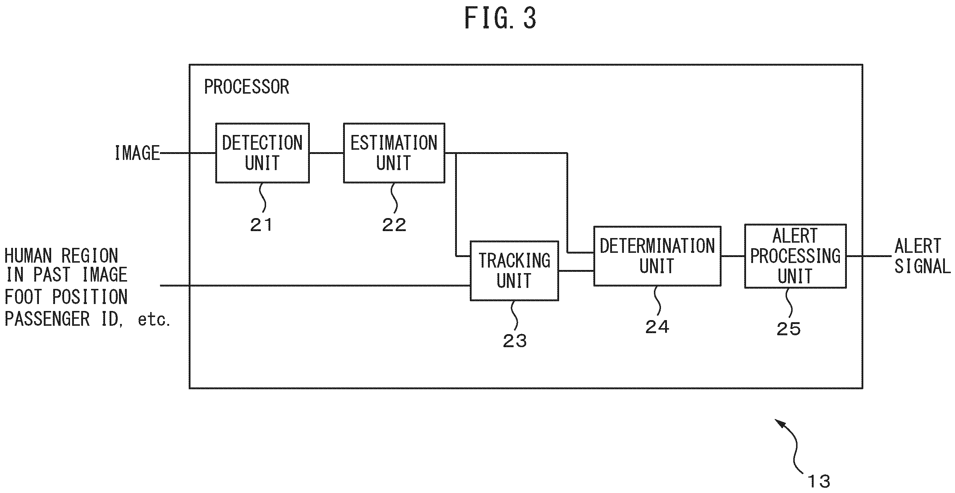

FIG. 3 is a functional block diagram of the processor 13, related to the movement sensing process including a foot position estimating process. The processor 13 includes a detection unit 21, an estimation unit 22, a tracking unit 23, a determination unit 24, and an alert processing unit 25. These units included in the processor 13 are, for example, functional modules implemented by a computer program executed by the processor 13, or may be dedicated operating circuits provided in the processor 13. Of these units included in the processor 13, processing executed by the detection unit 21 and the estimation unit 22 corresponds to the foot position estimating process.

The detection unit 21 detects a passenger in the interior region from each of time-series images generated by the camera 2. In the present embodiment, the detection unit 21 detects a passenger at predetermined intervals from the latest image obtained by the camera 2. The following describes a process for a single image because the detection unit 21 executes the same process for each image.

In the present embodiment, for each passenger, the detection unit 21 detects a human region representing the passenger from an image.

The detection unit 21 detects a passenger by inputting an image received by the foot position estimating device 4 from the camera 2 into a classifier that has been trained to detect a passenger's trunk and head. As such a classifier is used one based on a "deep neural network (DNN)." For example, a DNN having architecture of a convolutional neural network (CNN) type, such as Single Shot MultiBox Detector or YOLO, or a DNN having an attention mechanism, such as Vision Transformer, is used as the classifier. Alternatively, a classifier based on another machine learning technique, such as AdaBoost, may be used as the classifier. The classifier is pre-trained, using a large number of training images including images representing a passenger to be detected, in accordance with a predetermined training technique, such as backpropagation.

For various regions on the inputted image, the classifier outputs confidence scores indicating how likely it is that a passenger is represented therein. The detection unit 21 then detects a region whose confidence score is not less than a predetermined detection threshold as a human region. When multiple human regions overlap, the detection unit 21 executes Non-Maximum Suppression (NMS) or Soft NMS to prevent a single passenger from being detected multiple times. More specifically, the detection unit 21 calculates an Intersection over Union (IoU) of overlapping human regions, and discards human regions other than that which has a maximum confidence score when the IoU is not less than a predetermined threshold. Alternatively, the detection unit 21 reduces the confidence score as the IoU increases, and discards human regions whose reduced confidence scores are less than the predetermined detection threshold.

For each detected passenger, the detection unit 21 notifies the estimation unit 22 of the position and area of a human region representing the passenger.

For each detected passenger, the estimation unit 22 estimates a foot position of the passenger. In the present embodiment, the estimation unit 22 estimates a point of intersection of a line from a reference point in the human region to the vanishing point of the image with an edge of the human region to be a foot position of the human. In the present embodiment, since the camera 2 is mounted on the ceiling of the vehicle interior with the bottom up, a straight line extending the median line of a passenger standing straight toward the passenger's feet is assumed to lead toward the vanishing point of the image. Since a line from a reference point in a human region to a vanishing point approximates the median line, the passenger's foot is assumed to be at a point of intersection of the line with an edge of the human region.

The horizontal position of the reference point is set, for example, at the horizontal midpoint of the human region. The vertical position of the reference point is set at a distance from one of the upper and lower edges of the human region farther from the vanishing point toward the other edge of the human region closer to the vanishing point; the distance is the vertical length of the human region multiplied by a predetermined factor α that is greater than 0 and less than 1 (e.g., 0.5 to 0.6). However, the factor α may be set larger as the ratio of the vertical length to the horizontal length of the human region is greater. When the angle that the line connecting the vanishing point and the centroid of the human region forms with the horizontal direction is less than 45 degrees, the position of the reference point may be set with the horizontal and vertical directions in the above description interchanged. This adjustment of the position of the reference point depending on the shape of the human region reduces the angular difference between the line from the reference point to the vanishing point and the median line of the passenger represented in the human region, enabling more correct estimation of a foot position.

Depending on the passenger's position, the vanishing point may be within the human region. In such a case, the passenger is near a position immediately below the camera 2, and thus the passenger's foot is probably hidden by another body part of the passenger and invisible. In other words, the passenger's foot is probably inside the outer edge of the human region. Thus the estimation unit 22 estimates that a position where the line segment between the reference point and the vanishing point is internally divided in the ratio of the distance from the reference point to the vanishing point to the distance between the reference point and the point of intersection of the straight line connecting the reference point and the vanishing point with an edge of the human region closer to the vanishing point on the straight line is the passenger's foot position. When the distance between the reference point and the vanishing point is sufficiently small, i.e., when the distance is not greater than a predetermined identical determination threshold (e.g., several pixels), the estimation unit 22 may determine the vanishing point itself as the passenger's foot position.

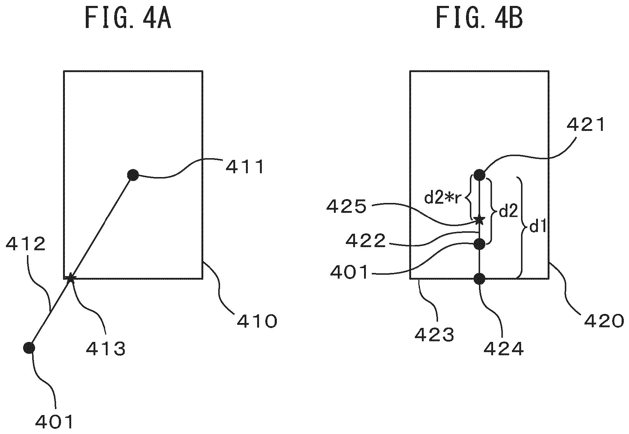

FIGs. 4A and 4B are schematic diagrams for explaining estimation of a passenger's foot position. In the example illustrated in FIG. 4A, a vanishing point 401 is below a human region 410. Hence, a point 413 of intersection of a straight line 412 connecting a reference point 411 in the human region 410 and the vanishing point 401 with the lower edge of the human region 410 is estimated to be a foot position of a passenger represented in the human region 410.

In the example illustrated in FIG. 4B, a vanishing point 401 is within a human region 420. Hence, the ratio r (=d2/d1) of the distance d2 from a reference point 421 in the human region 420 to the vanishing point 401 to the distance d1 between the reference point 421 and a point 424 of intersection of a straight line 422 connecting the reference point 421 and the vanishing point 401 with an edge 423 of the human region 420 closer to the vanishing point 401 on the straight line 422 is calculated. Then a position 425 where the line segment between the reference point 421 and the vanishing point 401 is internally divided in the ratio r is estimated to be a foot position of a passenger represented in the human region 420.

Even when the vanishing point is outside a human region, a passenger's foot position in an image may be within the human region, depending on the characteristics of the imaging optical system of the camera 2. Thus, according to a modified example, the estimation unit 22 may correct the passenger's foot position so that a position on the line connecting the reference point in the human region and the vanishing point at a correction distance from the point of intersection toward the reference point is the foot position; the correction distance is preset depending on the distance between the reference point and the vanishing point. In this case, the relationship between the distance from a reference point to a vanishing point and a correction distance from a point of intersection to an actual foot position is experimentally determined in advance. Then, a reference table representing the relationship between the distance from a reference point to a vanishing point and a correction distance, which is made based on this experimental result, is prestored in the memory 12. By referring to the reference table, the estimation unit 22 determines a correction distance corresponding to the distance between the reference point and the vanishing point.

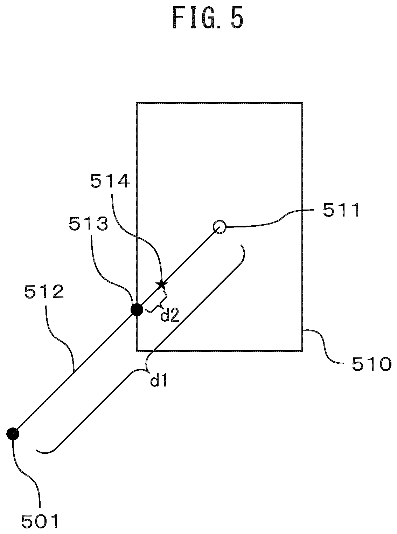

FIG. 5 is a schematic diagram for explaining estimation of a passenger's foot position of this modified example. In this example, a correction distance d2 depending on the distance d1 between a reference point 511 in a human region 510 and a vanishing point 501 is set on a straight line 512 connecting the reference point 511 and the vanishing point 501. Then, a position 514 on the straight line 512 in the human region 510 at the correction distance d2 from a point 513 of intersection of the straight line 512 with an edge of the human region 510 toward the reference point 511 is estimated to be a passenger's foot position.

For each passenger detected from the image, the estimation unit 22 notifies the tracking unit 23 and the determination unit 24 of the estimated foot position and the position and area of the human region.

The tracking unit 23 tracks the detected passenger in one or more images representing the passenger among time-series images generated by the camera 2. For each passenger detected over multiple images, the tracking unit 23 associates human regions of the same passenger with each other over these images.

The tracking unit 23 applies a predetermined tracking technique, such as KLT tracking or ByteTrack, to each human region in the latest image. In this way, the tracking unit 23 associates each human region in the latest image with a human region of the same passenger who is detected in a previously obtained image (hereafter a "past image") and who is being tracked. The tracking unit 23 tracks each passenger by repeating the above-described process whenever notified by the estimation unit 22 of the result of estimation of a foot position in the latest image. The tracking unit 23 assigns a unique identification number (hereafter a "passenger ID") to each passenger being tracked, and determines a line connecting foot positions specified for the passenger being tracked in chronological order as a trajectory of the passenger's foot position. The tracking unit 23 starts new tracking of a human region that is not associated with any human region representing a passenger being tracked in the past image among the human regions detected from the latest image, assuming that the passenger represented in the human region has entered the interior region anew. Conversely, when a human region of one of the passengers being tracked in the past image is not associated with any human region in the latest image, the tracking unit 23 finishes tracking of the passenger, assuming that the passenger being tracked has exited the interior region.

For each of one or more detected passengers, the determination unit 24 determines the distance between the passenger's foot positions at the start and the end of a predetermined period (e.g., several seconds) and the length of the trajectory in the period, based on the result of tracking by the tracking unit 23. The determination unit 24 determines that the passenger has moved in the predetermined period, in the case where the distance between the foot positions at the start and the end is not less than a first threshold, and where the length of the trajectory is not less than a second threshold.

The predetermined period may be any sub-period within the period of tracking of passengers. For example, at each update of the result of tracking by the tracking unit 23, the determination unit 24 determines the update time as the end of the predetermined period and the timing a predetermined period before the update time as the start of the predetermined period. Alternatively, the determination unit 24 may set the start and the end of the predetermined period as described above within a movement forbidden period during which passengers in the vehicle 1 are forbidden to move. The movement forbidden period may be a period during which an entrance door of the vehicle 1 is closed or the vehicle 1 is moving. Thus the determination unit 24 may receive information on opening and closing of the door or on the state of travel of the vehicle 1 from an electronic control unit that controls the door or travel of the vehicle 1, and set the movement forbidden period, based on the received information.

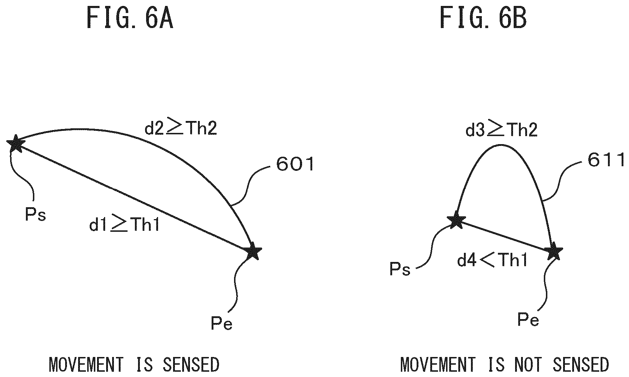

FIGs. 6A and 6B are schematic diagrams for explaining determination of movement sensing. In the example illustrated in FIG. 6A, the distance d1 between a passenger's foot positions Ps and Pe at the start and the end of a predetermined period is not less than a first threshold Th1. In addition, the length d2 along a trajectory 601 of the passenger's foot position from the start to the end of the predetermined period is not less than a second threshold Th2. Hence, the passenger's movement is sensed in this example.

In the example illustrated in FIG. 6B, the length d3 along a trajectory 611 from a passenger's foot position Ps at the start of a predetermined period to the passenger's foot position Pe at the end thereof is also not less than the second threshold Th2. However, in this example, the distance d4 between the foot positions Ps and Pe at the start and the end of the predetermined period is less than the first threshold Th1. Hence, the passenger's movement is not sensed in this example.

As the length along the trajectory of the foot position from the start to the end of the predetermined period, the determination unit 24 calculates the sum of the distances between the foot positions at two successive times on the trajectory in the predetermined period. Alternatively, the determination unit 24 may calculate the sum of the distance between the foot positions at the start of the predetermined period and a specific time in the predetermined period and the distance between the foot positions at the specific time and the end of the predetermined period as the length of the trajectory of the foot position from the start to the end of the predetermined period. The specific time may be, for example, the midpoint of the start and the end of the predetermined period or the time when the foot position is farthest from the foot position at the start or the end of the predetermined period.

In some cases, the aspect ratio of individual pixels of the camera 2 is not 1: 1. In such cases, the determination unit 24 may calculate the distance between two points on the trajectory by multiplying at least one of the horizontal and vertical distances between these two points by a correction factor corresponding to the inverse of the aspect ratio of pixels.

The determination unit 24 may execute the above-described process during tracking of a passenger every time an image is obtained by the camera 2, and sense movement of the passenger only when the above-described condition for movement sensing is met multiple times in succession.

When a passenger's foot position at the end of the predetermined period is outside the vehicle 1, the determination unit 24 may omit to sense movement of the passenger. This is because in this case the passenger has probably got off the vehicle 1, and thus it is useless to sense movement of the passenger.

When movement of a passenger being tracked is sensed, the determination unit 24 notifies the alert processing unit 25 of the result of the sensing.

When notified by the determination unit 24 that a passenger's movement is sensed, the alert processing unit 25 outputs an alert signal for alerting passengers inside the vehicle not to move to the alert device 3 via the communication interface 11. Alternatively, the alert processing unit 25 may output a movement sensing signal indicating that a passenger's movement is sensed via the communication interface 11 to an electronic control unit that controls travel of the vehicle 1. When a movement sensing signal is received while the vehicle 1 is stopped, the electronic control unit may keep stopping the vehicle 1 until the movement sensing signal is no longer received. Alternatively, when a movement sensing signal is received while the vehicle 1 is moving, the electronic control unit may decelerate the vehicle 1 at deceleration that does not cause a passenger standing inside the vehicle to fall down, and further stop the vehicle 1 on a road shoulder.

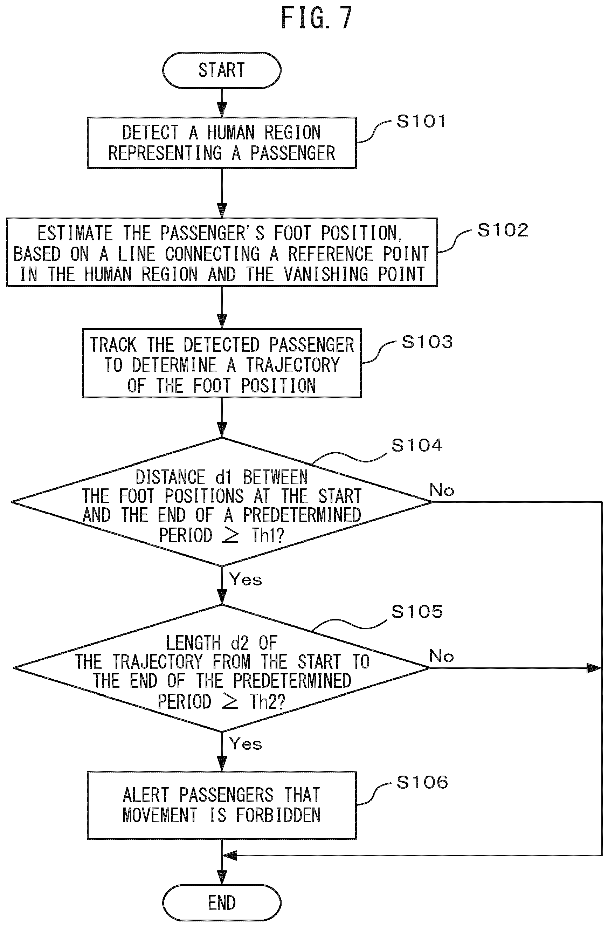

FIG. 7 is an operation flowchart of the movement sensing process including the foot position estimating process. The processor 13 executes the movement sensing process according to the operation flowchart described below.

The detection unit 21 detects a human region representing a passenger from an image generated by the camera 2 (step S101). The estimation unit 22 estimates the passenger's foot position, based on a line connecting a reference point in the human region and the vanishing point (step S102). The tracking unit 23 tracks the detected passenger to determine a trajectory of the foot position (step S103).

The determination unit 24 determines whether the distance d1 between the foot positions at the start and the end of a predetermined period during tracking is not less than the first threshold Th1 (step S104). When the distance d1 is not less than the first threshold Th1 (Yes in step S104), the determination unit 24 determines whether the length d2 of the trajectory of the foot position from the start to the end of the predetermined period is not less than the second threshold Th2 (step S105). When the length d2 of the trajectory is not less than the second threshold Th2 (Yes in step S105), the determination unit 24 senses the passenger's movement. The alert processing unit 25 then alerts passengers inside the vehicle that movement is forbidden via the notification device 3 (step S106). Thereafter the processor 13 terminates the movement sensing process.

When the distance d1 is less than the first threshold Th1 in step S104 (No in step S104) or when the length d2 of the trajectory is less than the second threshold Th2 in step S105 (No in step S105), the processor 13 terminates the movement sensing process without sensing the passenger's movement. When multiple passengers are sensed and being tracked in steps S101 to S103, the processor 13 executes the processing of steps S104 and S105 for each passenger, and executes the processing of step S106 when movement of one of the passengers is sensed.

As has been described above, the foot position estimating device estimates a point of intersection of a line from a reference point in a human region to the vanishing point of an image with an edge of the human region to be a foot position of a human represented in the human region. This enables the foot position estimating device to estimate a human's foot position correctly even if a camera that generates images representing a greatly distorted object because of distortion or the like is used as the image capturing unit. Further, the foot position estimating device can estimate a human's foot position correctly without processing involving a large amount of computation, such as a posture estimation model.

In the interior of the vehicle 1, there may be a region impassable to passengers because of installation of an object such as a railing. Thus, according to a modified example, a region in images corresponding to a region impassable to passengers inside the vehicle (hereafter an "impassable region") is prestored in the memory 12. The determination unit 24 determines whether the trajectory of a passenger being tracked crosses the impassable region. When the trajectory crosses the impassable region, tracking of the passenger may have failed. Thus the determination unit 24 does not sense movement of a passenger having such a trajectory. Further, when a passenger's movement indicated by a trajectory is too fast, tracking of the passenger has probably failed. Thus, when the moving speed calculated from the distance and the time difference between two successive points on the trajectory exceeds an upper-limit speed, the determination unit 24 does not sense movement of a passenger having such a trajectory.

Of the passengers being tracked, a passenger whose movement distance between two successive times gradually increases is supposed to accelerate. Thus the tracking unit 23 may correct a predicted position of a human region of such a passenger so that in a most recent predetermined period the predicted position in the next frame is further away along the passenger's moving direction in images from the position where the human region is detected in the latest image.

The detection unit 21 may modify the threshold for IoU in the NMS or Soft NMS processing, depending on the position in the image. For example, when a fisheye lens is used as the imaging optical system of the camera 2, the closer to an image edge, the smaller a subject is represented. Thus, the closer to an image edge, the smaller the detection unit 21 may set the threshold for IoU. Similarly, when ByteTrack is employed as the tracking technique, the closer to an image edge, the smaller the tracking unit 23 may set the threshold for IoU between a predicted position in the next frame of a human region of a passenger being tracked and the human region detected from the image of the next frame. Alternatively, the processor 13 may execute pre-processing to correct distortion of each image obtained by the camera 2 caused by distortion or the like of the imaging optical system of the camera 2, and then execute the movement sensing process of the above-described embodiment or modified examples.

According to a modified example of a movement sensing device, the detection unit 21 may estimate the position of a human's trunk part instead of the human's foot position. A trunk part is another example of the predetermined part. In this case, the classifier used by the detection unit 21 for detecting a human is pre-trained so that only a trunk part is included in a human region; the detection unit 21 determines the centroid of a human region as the position of a trunk part; the tracking unit 23 determines a line connecting the centroid positions of human regions in images where a human is detected in chronological order as the trajectory of the trunk part of the detected human. The determination unit 24 determines whether the human has moved, based on the trajectory of the trunk part, as in the embodiment. In this modified example also, movement of the detected human can be sensed correctly by referring to the length along the trajectory as well as the distance between the positions of the trunk part at the start and the end of a predetermined period.

The foot position estimating device of the above-described embodiment or modified examples may also be used for application other than movement sensing. For example, the processor 13 may determine whether an estimated occupant's foot position is within a corresponding region in images corresponding to a predetermined region in the vehicle 1. When the foot position is within the corresponding region, the processor 13 may determine that the occupant is in the predetermined region. The predetermined region may be, for example, a region where entry of occupants is forbidden at opening and closing of a door, such as a region near an entrance of the vehicle 1. In this case, when it is determined that an occupant has entered the predetermined region, the processor 13 may notify a control unit that controls opening and closing of the door of the vehicle 1 that there is an occupant near the door via the communication interface 11. When it is determined that all occupants are outside the predetermined region after the notification, the processor 13 may notify the control unit that no occupant is near the door via the communication interface 11. The control unit may stop opening and closing the door from notification that there is an occupant near the door until notification that no occupant is near the door.

The processor 13 may identify a crowded area inside the vehicle, based on estimated foot positions of respective occupants. In this case, an area in the vehicle 1 where occupants can stay is divided into multiple subareas. For each subarea, a corresponding block is set in images. The position and area of the corresponding block of each subarea may be prestored in the memory 12. The processor 13 identifies a block including an estimated foot position for each occupant detected from the latest image to count, for each block, the number of occupants whose foot positions are within the block. For each block, the processor 13 identifies the number of occupants whose foot positions are within the block as the number of occupants in the subarea corresponding to the block. The processor 13 then identifies a subarea where the number of occupants exceeds a predetermined threshold as a crowded subarea. In this way, the processor 13 can identify a crowded subarea and an uncrowded subarea inside the vehicle.

In addition, the foot position estimating device may be used for identifying an abnormal region, based on the distribution of estimated foot positions of respective occupants.

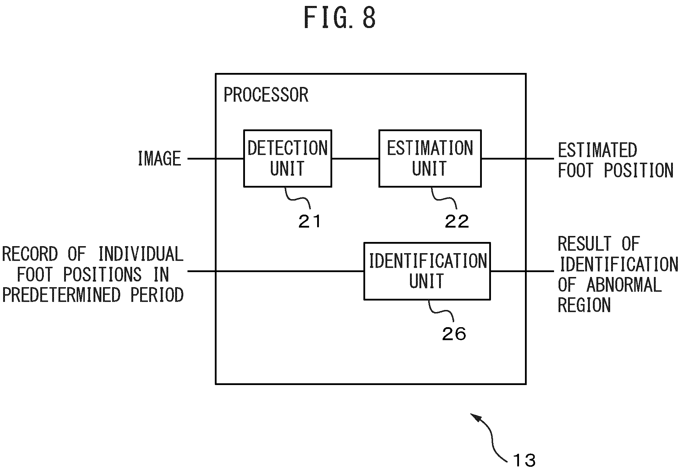

FIG. 8 is a functional block diagram of the processor of a modified example in which an abnormal region is identified based on the results of estimation of a foot position. The processor 13 of this modified example includes a detection unit 21, an estimation unit 22, and an identification unit 26. These units included in the processor 13 are, for example, functional modules implemented by a computer program executed by the processor 13, or may be dedicated operating circuits provided in the processor 13. The following describes the functions of the units included in the processor 13 that differ from those in the embodiment.

The detection unit 21 detects a human region from each of images generated by the camera 2 taking pictures at different timings. For each of these images, the estimation unit 22 stores an occupant's foot position estimated from the human region detected from the image, together with the timing of capture of the image, in the memory 12.

The identification unit 26 identifies an abnormal region, based on the distribution of occupants' foot positions in a most recent predetermined period stored in the memory 12. For example, in a region inside the vehicle 1 where occupants can stay but are absent for longer than a certain period, there may be something wrong that makes occupants avoid the region. Thus the identification unit 26 identifies such a region where occupants are absent in a most recent predetermined period as an abnormal region. The predetermined period may be, for example, several dozen minutes to several hours.

As in the above-described modified example, an area in the vehicle 1 where occupants can stay is divided into multiple subareas. For each subarea, a corresponding block is set in images. The position and area of the corresponding block of each subarea may be prestored in the memory 12. For each image stored in the memory 12 whose timing of capture is within the most recent predetermined period, the identification unit 26 identifies blocks including the foot positions of respective occupants detected from the image. In this way, the identification unit 26 counts, for each block, the number of foot positions included in the block. The identification unit 26 then identifies a subarea corresponding to a block where the number of foot positions is less than a predetermined detection threshold (e.g., 1 to 3) as an abnormal region.

When an abnormal region is identified, the identification unit 26 transmits information indicating the position and area of the identified region and identifying information of the vehicle 1 via the communication interface 11 and a wireless communication terminal (not illustrated) mounted on the vehicle 1 to a server (not illustrated) that manages the vehicle 1. Alternatively, the identification unit 26 may notify information indicating the position and area of the identified region to the control unit that controls travel of the vehicle 1, via the communication interface 11. In this case, when notified that an abnormal region is identified, the control unit may make the vehicle 1 travel to a place where the vehicle 1 is maintained after occupants of the vehicle 1 are made to get off at a predetermined place.

According to this modified example, the foot position estimating device can identify an abnormal region, using the result of estimation of foot positions of respective occupants.

The computer program causing a computer to execute the process executed by the processor 13 of the foot position estimating device 4 of the above-described embodiment or modified examples may be distributed, for example, in a form recorded on a storage medium such as an optical medium or a magnetic medium.

As described above, those skilled in the art may make various modifications according to embodiments within the scope of the present invention.

## Claims

1. A foot position estimating device (4) comprising:
a detection unit (21) that detects a human region representing a human in a predetermined region from an image generated by an image capturing unit (2) configured to capture the predetermined region; and
an estimation unit (22) that estimates a point of intersection of a line from a reference point in the human region to a vanishing point of the image with an edge of the human region as a foot position of the human.

2. The foot position estimating device (4) according to claim 1, wherein the estimation unit (22) corrects the foot position so that a position on the line at a correction distance from the point of intersection toward the reference point is the foot position, the correction distance being preset depending on a distance between the vanishing point and the reference point.

3. The foot position estimating device (4) according to claim 1, wherein when the vanishing point is within the human region, the estimation unit (22) estimates that a position where the line segment between the reference point and the vanishing point is internally divided in a ratio of a distance between the reference point and the vanishing point to a distance between the reference point and the point of intersection of the line with an edge of the human region closer to the vanishing point on the line is the foot position.

4. The foot position estimating device (4) according to any one of claims 1 to 3, wherein the detection unit (21) detects the human region from each of time-series images obtained by the image capturing unit in a predetermined period,
the estimation unit (22) estimates a foot position of the human in each of the images, and
the foot position estimating device further comprising:
a tracking unit (23) that tracks the detected human in the images to determine a trajectory of the foot position of the human in the predetermined period; and
a determination unit (24) that determines that the detected human has moved in the predetermined period, in the case where a distance between the foot positions of the detected human at the start and the end of the predetermined period is not less than a first threshold, and where a length of the trajectory from the start to the end of the predetermined period is not less than a second threshold.

5. The foot position estimating device (4) according to any one of claims 1 to 3, wherein the detection unit (21) detects the human region from each of the images captured at different timings,
the estimation unit (22) stores the foot positions estimated from the respective images in a storage unit (12), and
the foot position estimating device further comprising an identification unit (26) that identifies an abnormal position, based on the distribution of the foot positions stored in the storage unit (12).

6. A method for estimating a foot position, comprising:
detecting a human region representing a human in a predetermined region from an image generated by an image capturing unit (2) configured to capture the predetermined region; and
estimating a point of intersection of a line from a reference point in the human region to a vanishing point of the image with an edge of the human region as a foot position of the human.

7. A foot position estimating system (10) comprising:
an image capturing unit (2) configured to capture a predetermined region; and
a foot position estimating device (4) that estimates a foot position of a human in the predetermined region,
the foot position estimating device (4) comprising:
a detection unit (21) that detects a human region representing a human in the predetermined region from an image generated by the image capturing unit (2); and
an estimation unit (22) that estimates a point of intersection of a line from a reference point in the human region to a vanishing point of the image with an edge of the human region as a foot position of the human.

8. A computer program for estimating a foot position, the computer program causing a computer to execute a process comprising:
detecting a human region representing a human in a predetermined region from an image generated by an image capturing unit (2) configured to capture the predetermined region; and
estimating a point of intersection of a line from a reference point in the human region to a vanishing point of the image with an edge of the human region as a foot position of the human.

9. A movement sensing device (4) comprising:
a detection unit (21) that detects a human in a predetermined region from each of time-series images generated by an image capturing unit (2) configured to capture the predetermined region, and that estimates the position of a predetermined part of the detected human in one or more images representing the human;
a tracking unit (23) that tracks the detected human in the one or more images to determine a trajectory of the position of the predetermined part of the human in a predetermined period; and
a determination unit (24) that determines that the detected human has moved in the predetermined period, in the case where a distance between the positions of the predetermined part of the detected human at the start and the end of the predetermined period is not less than a first threshold, and where a length of the trajectory from the start to the end of the predetermined period is not less than a second threshold.
